# EUROPEAN PATENT SPECIFICATION

(11) **EP 4 288 669 B1**
(45) Date of publication and mention of the grant of the patent: **25.11.2026**
(21) Application number: 22708390.4
(22) Date of filing: 01.02.2022
(51) Int. Cl.: F04F 7/00, F16K 3/24

(54) **A REVOLVING VALVE FOR FEEDING AIR PULSES TO A RESONANCE TUBE FOR GENERATING LOW-FREQUENCY SOUND AND A METHOD FOR FEEDING THESE PULSES IN AN OPTIMAL WAY**
DREHVENTIL ZUM ZUFÜHREN VON LUFTIMPULSEN ZU EINEM RESONANZROHR ZUR ERZEUGUNG NIEDERFREQUENTER SCHALLE UND VERFAHREN ZUR OPTIMALEN ZUFÜHRUNG DIESER IMPULSE
VANNE TOURNANTE POUR ALIMENTER EN IMPULSIONS D'AIR UN TUBE DE RÉSONANCE POUR PRODUIRE UN SON BASSE FRÉQUENCE ET PROCÉDÉ D'ALIMENTATION DE CES IMPULSIONS DE MANIÈRE OPTIMALE

(30) Priority: 02.02.2021 SE 2130031
(43) Date of publication of application: 13.12.2023
(73) Proprietor: Tallstam AB, 16754 Bromma (SE)
(72) Inventor: OLSSON, Mats, 181 51 Lidingö (SE)
(74) Representative: Barker Brettell Sweden AB
(86) International application number: PCT/EP2022/052362
(87) International publication number: WO 2022/167425

(56) References cited:
- EP-A1- 1 542 810
- WO-A1-82/01328
- JP-A- 2002 018 357
- JP-A- 2013 213 459
- US-A1- 2002 118 601
- US-A1- 2011 243 796

## Description

### TECHNICAL FIELD

Embodiments herein relate to methods for feeding pressurized air pulses to the rear end of a quarter wave resonance tube for generating of a standing low-frequency sound wave in said quarter wave resonance tube. Other embodiments relate to revolving valve, consisting of a stationary outer cylinder, and an inner rotating cylinder, with a through hole, for supplying pressurized air pulses to the rear end of a quarter wave resonance tube, for generating a standing low-frequency sound wave in said quarter wave resonance tube.

### BACKGROUND AND PRIOR ART

It is known from the European patent EP 1 542 810 B1 that low-frequency sound can be generated by feeding pressurized air pulses to the rear end of a quarter wave resonance tube. In the embodiment according to the cited patent, the pressurized air pulses are supplied via a feeder unit having a piston moving in a cylinder. JP2002018357 A discloses a similar solution.

Another way of generating low-frequency sound is described in patent SE 8802452-6. In the embodiment according to the cited patent, the low-frequency sound is generated by a motor-driven piston that moves back and forth in a cylinder.

In both cases cited, sinusoidal pressure variations in the air in the rear end of the quarter wave resonance tube occur.

However, there are a couple of problems associated with equipment according to the two cited patents.

One problem is that the air inside the quarter wave resonance tube often contains particles which give rise to deposits on the moving surfaces which in turn causes operational disruptions.

Another problem with the invention according to the patent EP 1 542 810 B1 is that the movement of the piston in the cylinder is controlled by the sound pressure at the rear end of the quarter wave resonance tube. In the first moments after the pressurized air has been switched on and the piston is to start moving, the sound pressure in the rear end is very low, which sometimes means that the force on the piston, that the sound pressure creates, is unable to overcome the frictional force between the outer surface of piston and the inner surface of the cylinder, resulting in that the movement does not start.

A problem with equipment according to the patent SE 8802452-6 is wear on the moving surfaces since the piston must have a relatively high speed.

Another problem with equipment according to the patent SE 8802452-6 is that no pressurized air is supplied. If the equipment is connected to an industrial process with a high gas temperature and if said gas contains large amounts of particles, there is a great risk that the moving parts of the equipment are exposed to high temperature gas which contain large amounts of particles, which means a risk of high friction and the equipment stops.

### SUMMARY

The object of the present invention is to provide a method and an arrangement comprising a revolving valve that overcomes the problems mentioned above.

This object is solved according to the invention, which is defined by the appended claims.

A further problem will now be described. One problem with the equipment according to the patent EP 1 542 810 B1 is that the supply of pressurized air also takes place during time intervals of the oscillation cycle when the air pressure in the rear end of the quarter wave is low and thereby only gives a small addition to the in-put power. It is even the case that the supply of pressurized air also takes place during the time intervals of the oscillation cycle when the air pressure in the quarter wave resonance tube is negative, thereby reducing the in-put power.

The present invention relates to a method for feeding pressurized air pulses to the closed rear end of a quarter wave resonance tube for generating a standing low-frequency sound wave in said quarter wave resonance tube.

The method entails that said pressurized air pulses, with a given total supplied air volume during each oscillation cycle of the standing low-frequency sound wave, supply maximum in-put power to said standing low-frequency sound wave by feeding said pressurized air pulses only during the time intervals of the oscillation cycle when the air pressure, ie sound pressure, in said rear end of the quarter wave resonance tube is positive.

The present invention also relates to a revolving valve that feeds pressurized air pulses to the rear end of a quarter wave resonance tube for generating a standing low-frequency sound wave in said quarter wave resonance tube.

Said revolving valve enables that said pressurized air pulses, with a given total supplied air volume during each oscillation cycle, supply maximum in-put power to said standing low-frequency sound wave by feeding said pressurized air pulses only during the time intervals of the oscillation cycle when the air pressure, ie sound pressure, in said rear end of the quarter wave resonance tube is positive.

### DETAILED DESCRIPTION

The present description is now to be explained more closely by means of embodiments, which are disclosed as examples, and with reference to attached drawings.

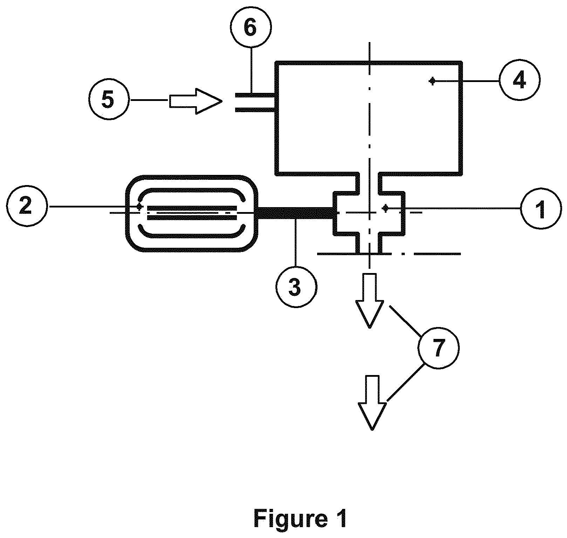

Figure 1 shows a feeder unit for supplying air pulses, 7, to the rear end of a quarter wave resonance tube (not shown in the figure). A constant air flow, 5, is supplied to a surge air tank, 4, via an inlet pipe, 6. The air pulses, 7, are created by the air flow from the surge air tank, 4, passing through a revolving valve, 1, which is driven by a speed-controlled electric motor, 2, via a shaft, 3. The revolving valve, 1, has the same rotational frequency and is in phase with the standing low-frequency sound wave in the quarter wave resonance tube

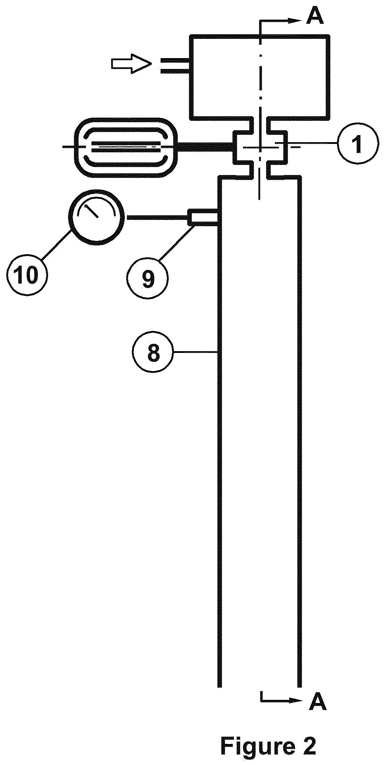

Figure 2 shows a low-frequency sound generator where the feeder unit according to figure 1 is mounted on a quarter wave resonance tube, 8. The air pressure (sound pressure) in the resonance tube, 8, is measured with the pressure sensor, 9, and can be read on the pressure gauge, 10.

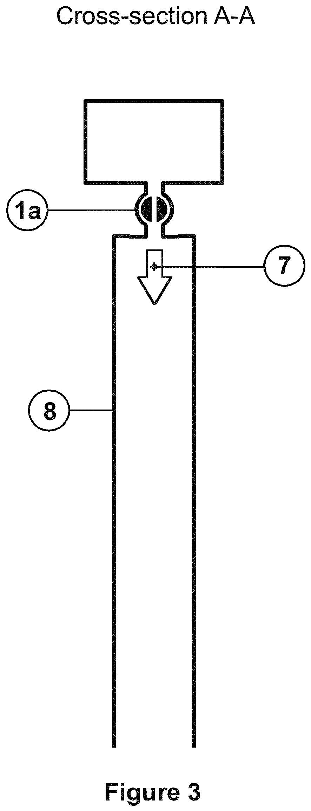

Figure 3 shows a cross-section of the low-frequency sound generator in figure 2 at a time step when the revolving valve, 1a, is open.

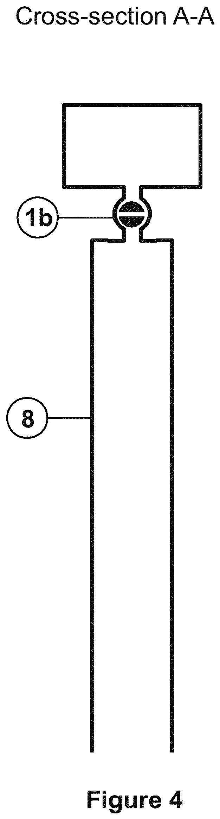

Figure 4 shows a cross-section of the low-frequency sound generator in figure 2 at a time step when the revolving valve, 1b, is closed.

Figure 5 shows the revolving valve, 1, consisting of an outer cylinder, 13, and an inner revolving cylinder, 12. There is a small gap, 11, between the two cylinders. The inner revolving cylinder, 12, has a through hole, 14. In the time moment shown in figure 5, the revolving valve,1, is completely open, which means that an air pulse, 15a, 15b, can pass through the through hole, 14.

Figure 6 shows the inner revolving cylinder, 12, of the revolving valve, 1, in position when it has just closed the air flow from the surge air tank, 4.

Figure 7 shows the revolving valve, 1, in a closed position.

Figure 8 shows the inner revolving cylinder, 12, of the revolving valve, 1, in a position just before it opens for the air supply from the surge air tank, 4.

Figure 9 shows the air pressure, ie sound pressure, as a function of time at the rear end of a resonance tube, 8, with a revolving valve, 1, according to figures 5, 6, 7 and 8, where the dimensions are selected so that the revolving valve, 1, is completely closed during the time intervals, 16, of the oscillation cycle when the air pressure in the rear end of the quarter wave resonance tube is negative.

Figure 10 shows a revolving valve, 1, where both the diameter of the outer cylinder, 13a, and the diameter of the inner revolving cylinder, 12a, are larger than in figures 5, 6, 7 and 8, but the diameter of the through hole, 14 is the same.

Figure 11 shows the air pressure, ie sound pressure, as a function of time at the rear end of a resonance tube with a revolving valve, 1, according to figure 10 where the dimensions are selected so that the revolving valve, 1, is completely closed during longer time, 17, than the time intervals of the oscillation cycle when the air pressure in the rear end of the quarter wave resonance tube is negative.

Figure 12 shows a revolving valve, 1, where both the diameter of the outer cylinder, 13b, and the diameter of the inner revolving cylinder, 12b, are smaller than in figures 5, 6, 7 and 8, but the diameter of the through hole, 14b, is the same. When the inner revolving cylinder, 12b, is in the position shown in figure 12, a small air flow, 18a, 18b, passes through the through hole, 14b.

Figure 13 shows the air pressure (sound pressure) as a function of time at the rear end of a quarter wave resonance tube with a revolving valve, 1, according to figure 12 where the dimensions are selected so that the revolving valve, 1, is completely closed during shorter time, 19, than the time intervals of the oscillation cycle when the air pressure in the rear end of the quarter wave resonance tube is negative.

The portion of the air pulse applied during the time interval 19b, when the sound pressure in the quarter wave resonance tube is negative, causes a decrease in input power to the low-frequency standing sound wave in the resonance tube.

The portion of the air pulse applied during the time interval 19c when the sound pressure in the quarter wave resonance tube is low provides only a small addition of in-put power to the low-frequency standing sound wave in the resonance tube.

This means that a large part of the total supplied air volume during each oscillation is consumed during time intervals when the air pulse reduces in-put power or only gives a small addition of in-put power to the low-frequency standing sound wave in the resonance tube.

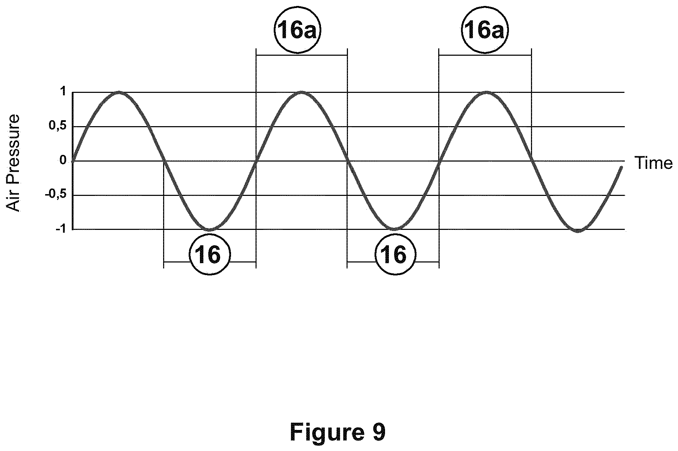

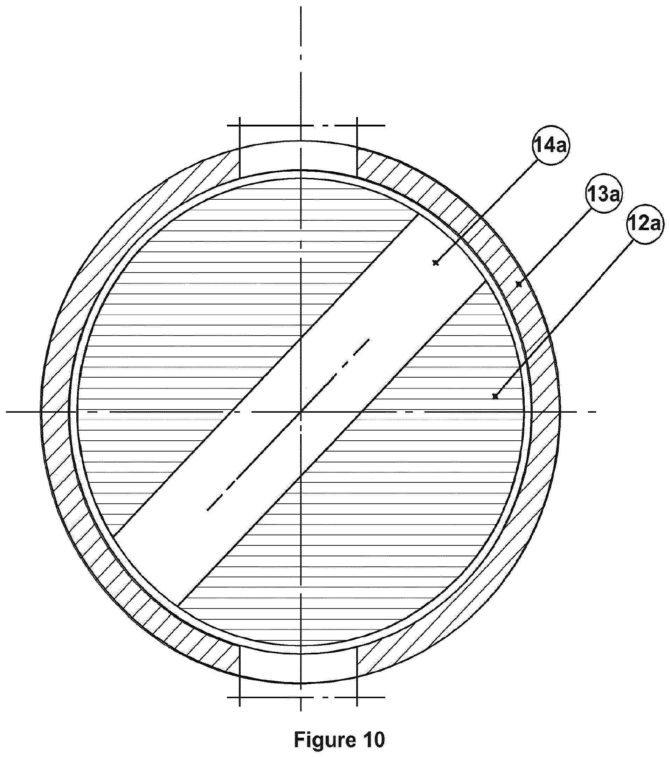

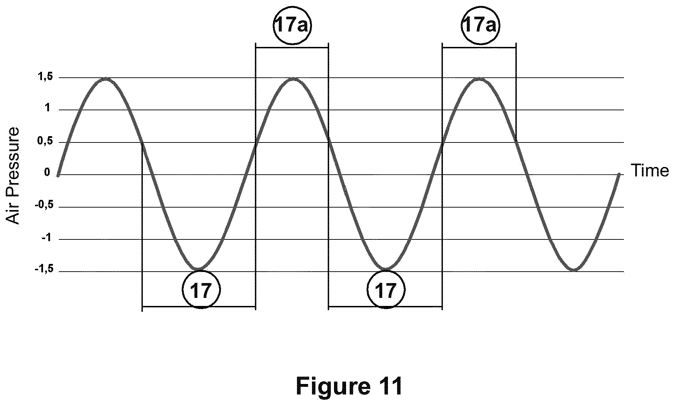

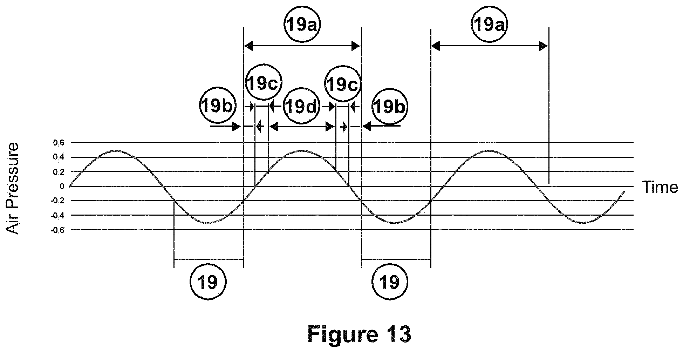

A comparison between figure 9, figure 11 and figure 13 shows that the variation in air pressure, ie sound pressure, at the rear end of the resonance tube, is highest in an embodiment of the revolving valve according to figure 10.

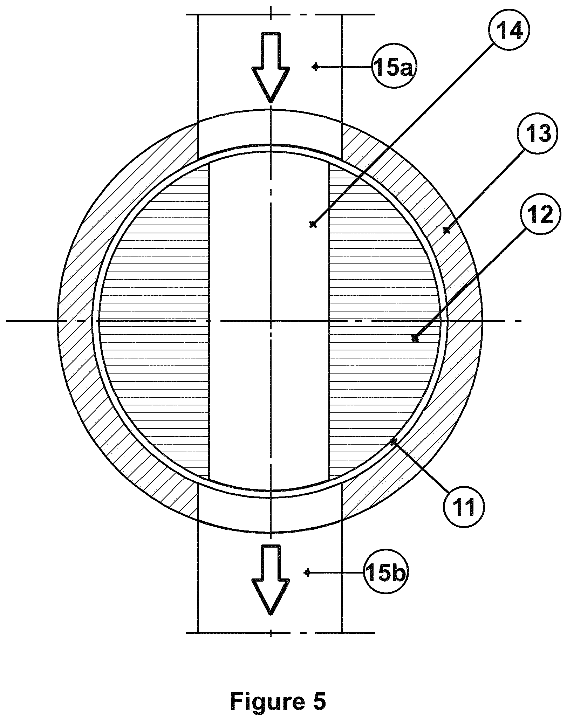

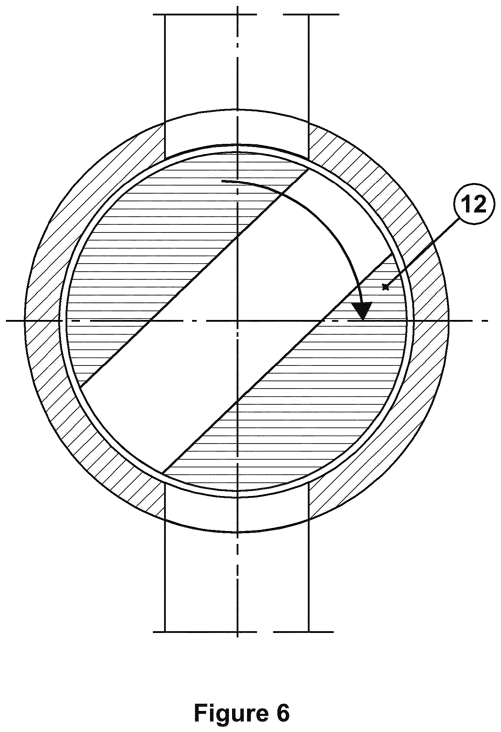

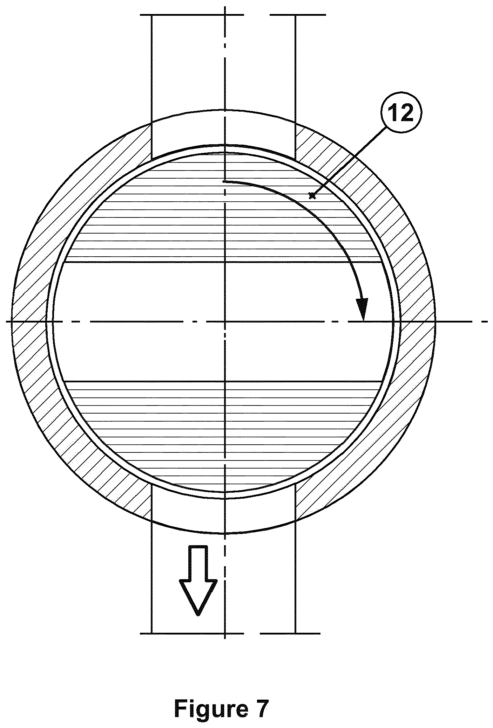

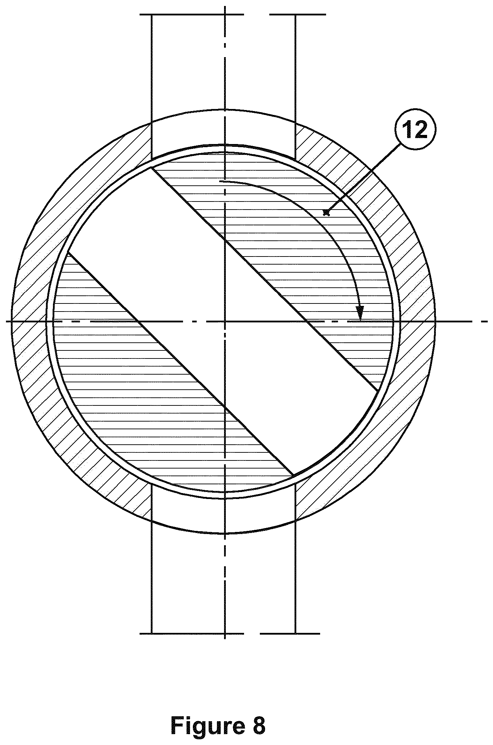

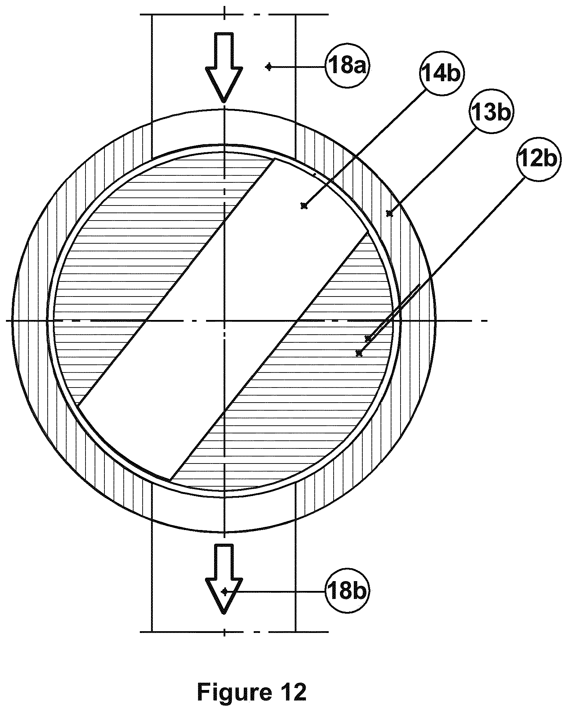

The in-put power to the standing low-frequency sound wave in a quarter wave resonance tube depends on the magnitude of the variation in air pressure, ie sound pressure. This means that an embodiment according to figure 10 gives higher in-put power than the embodiments according to figures 5, 6, 7, 8 and figure 12, respectively.

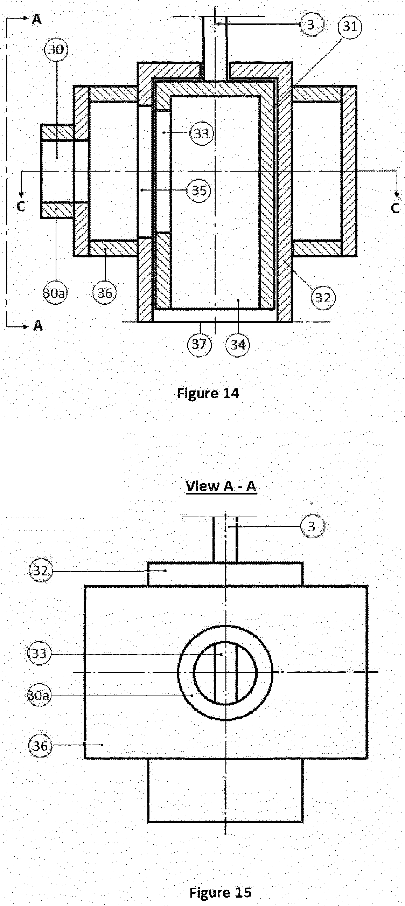

Figure 14 shows a revolving valve, 1, with a radial flow inlet, 30, and an axial flow outlet, 34. The revolving inner cylinder, 31, of this embodiment of the revolving valve, 1, has an inlet flow hole in the form of a rectangular oblong slit, 33.The axial flow outlet hole, 34, of the revolving inner cylinder, 31, has a much larger cross-sectional area than the area of the rectangular oblong slit, 33. The revolving inner cylinder, 31, revolves in an outer stationary cylinder, 32. The outer stationary cylinder, 32, has a rectangular inlet flow hole, 35 and a connection, 37, to the quarter wave resonance tube, 8. Said rectangular inlet flow hole, 35, is slightly longer in the axial direction than the inlet flow rectangular oblong slit, 33, in the revolving inner cylinder,31.The opening of said rectangular inlet flow hole perpendicular to the center line is chosen so that the opening angle, β, is approximately 90 degrees. The outer stationary cylinder, 32, has a connection box, 36, and a connection socket 30a.

Figure 15 shows view A-A of the revolving valve according to figure 14.

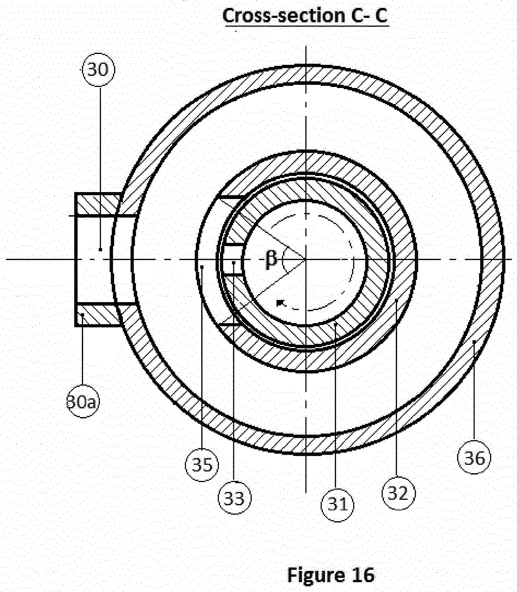

Figure 16 shows cross-section C-C of the revolving valve according to figure 14.

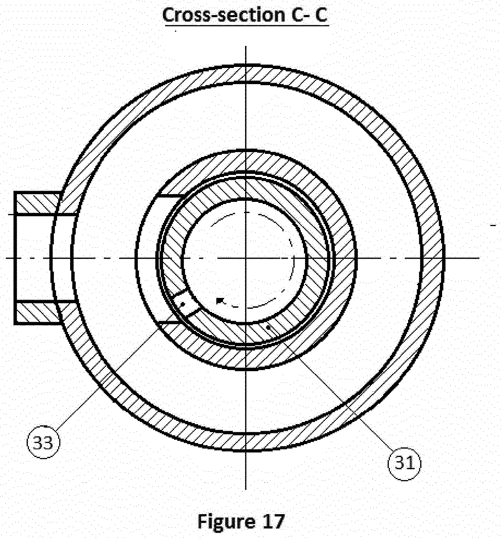

Figure 17 shows a time moment when the rotating inner cylinder 31 has just opened the passage for pressurized air.

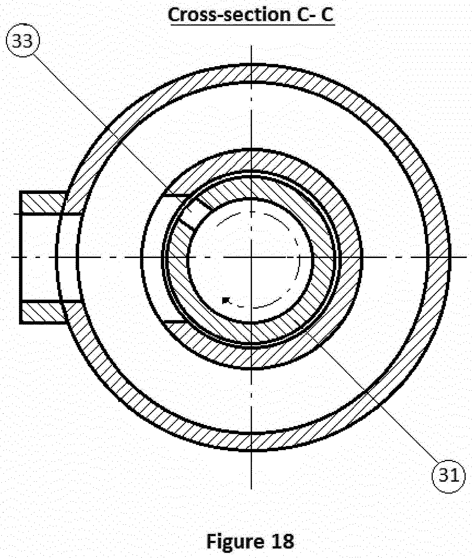

Figure 18 shows a time moment when the rotating inner cylinder 31 just before it closes the passage for pressurized air.

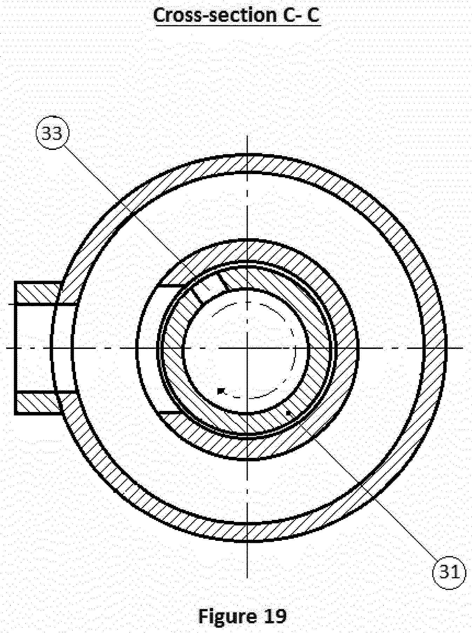

Figure 19 shows a time moment when the rotating inner cylinder 31 just has closed the passage for pressurized air.

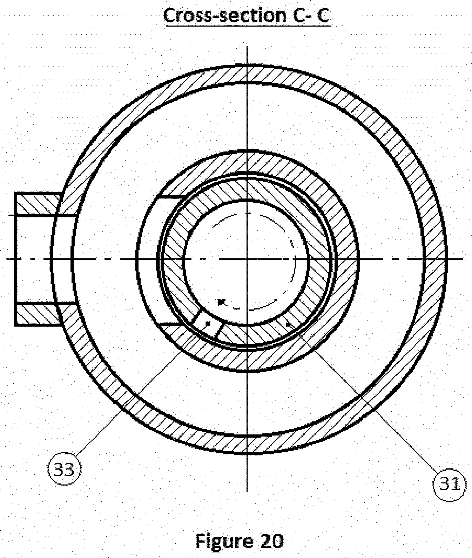

Figure 20 shows a time moment when the rotating inner cylinder 31 just before it opens the passage for pressurized air.

The advantage of the embodiment according to figures 14, 15, 16, 17, 18, 19 and 20 in comparison with the embodiment according to figure 5, is that the physical dimensions are smaller. In addition, the pressure drop of the feeding pressurized air pulses is lower. It will be especially favorable if the angle β in figure 16 is about 90 degrees and the width of the inlet flow hole, (33), in the inner revolving cylinder, (31), is half or less of the width of the inlet hole, (35), in the outer stationary cylinder, (32).

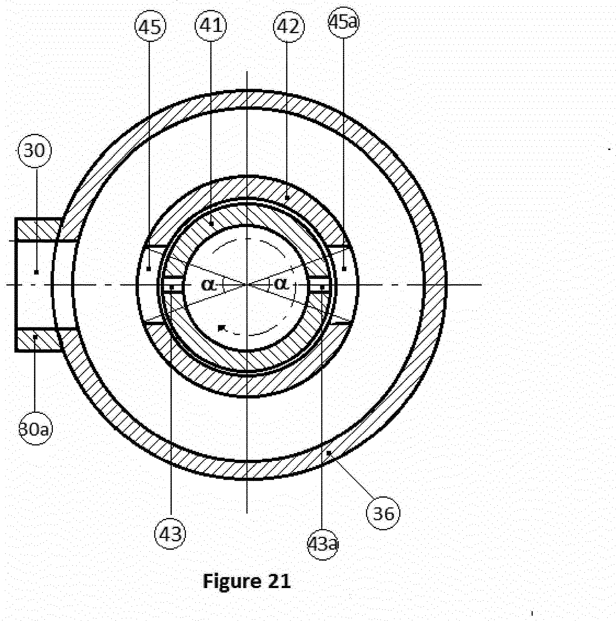

Figure 21 shows another embodiment where there are two inlet openings, 45 and 45a, respectively, in the outer stationary cylinder, 42, and the two inlet openings, 43 and 43a, respectively, in the inner rotating cylinder 41.

The two inlet openings 45 and 45a, respectively, in the outer stationary cylinder, 42, have a total area equal to the area of the inlet opening, 35, in the outer stationary cylinder 32 according to figure 16. The two inlet openings 43 and 43a, respectively, in the inner revolving cylinder, 41, has a total area equal to the area of the inlet opening, 33, in the inner revolving cylinder 31 according to figure 16.

The sum of the two angles α in figure 21 should be approximately 90 degrees.

The advantage of the embodiment according to figure 21 in comparison with the embodiment according to figures 14, 15 and 16, is that the inner rotating cylinder, 41, is subjected to a symmetrical force from the pressurized air.

In this patent application, the term low-frequency sound is to be understood as sound with frequencies around 20 Hz and lower.

The benefits of the present invention are:
A. The pressurized air pulses are only supplied during the time intervals of the oscillation cycle when there is a high air pressure, ie sound pressure, in the rear end of the quarter wave resonance tube, which means high in-put of power to the standing sound wave at a given supplied volume of pressurized air. In relation to the embodiment according to patent EP 1 542 810 B1, the consumption of pressurized air for a given input of power to the low-frequency sound wave, can be halved in the present invention.
B. The through hole in the revolving valve can have a large cross-sectional area, which means that there will be small pressure drop of the pressurized air during the passage of from the surge tank to the rear end of the quarter wave resonance tube, which in turn enables the pressurized air to have a low pressure. In relation to the embodiment according to patent EP 1 542 810 B1, the required pressure of the pressurized air can be halved.
C. The advantages A and B as above, respectively, mean that the power requirement for operating a low-frequency sound generator according to the present invention can be reduced by 75%.

## Claims

1. A method for feeding pressurized air pulses to the rear end of a quarter wave resonance tube (8) for generating of a standing low-frequency sound wave in said quarter wave resonance tube (8), the method comprising generating pressurized air pulses by feeding pressurized air through at least one through hole (14, 14a) of a revolving valve (1) consisting of a stationary outer cylinder (13, 13a, 32) and an inner revolving cylinder (12, 12a, 31), wherein as the inner cylinder (12, 12a, 31) revolves, pressurized air passes through said through hole (14, 14a) during the time intervals of the oscillation cycles of said standing low-frequency sound wave when the air pressure in said rear end of the quarter wave resonance tube (8) is positive, and is blocked from passing through said through hole (14, 14a) during the time intervals of the oscillation cycles of said standing low-frequency sound wave when the air pressure in said rear end of the quarter wave resonance tube (8) is negative, thereby supplying maximum input power to said standing low-frequency sound wave.

2. An arrangement comprising a quarter wave resonance tube (8) and a revolving valve (1) consisting of a stationary outer cylinder (13, 13a, 32) and an inner revolving cylinder (12, 12a, 31) with at least one through hole (14, 14a) for supplying pressurized air pulses to the rear end of the quarter wave resonance tube (8) for generating a standing low-frequency sound wave in the quarter wave resonance tube (8), wherein said at least one through hole (14, 14a) is arranged such that as the inner cylinder (12, 12a, 31) revolves, pressurized air passes through said through hole (14, 14a) during the time intervals of the oscillation cycles of the standing low-frequency sound wave when the air pressure in the rear end of the quarter wave resonance tube (8) is positive, and is blocked from passing through said through hole (14, 14a) during the time intervals of the oscillation cycles of said standing low-frequency sound wave when the air pressure in said rear end of the quarter wave resonance tube (8) is negative, thereby supplying maximum input power to said standing low-frequency sound wave.

3. The arrangement according to claim 2, wherein the dimensions of the stationary outer cylinder (13, 13a, 32), the inner revolving cylinder (12, 12a, 31), and the at least one trough hole (14, 14a), respectively, are selected such that the air passage through the through hole (14, 14a) is closed for at least half of the cycle time of the revolving valve (1).

4. The arrangement according to claim 3, wherein the dimensions of the stationary outer cylinder (13a), the inner revolving cylinder (12a), and the at least one through hole (14a), respectively, are selected such that the air passage through the through hole (14a) is closed for at least three quarters of the cycle time of the revolving valve (1).

5. The arrangement according to any of claims 2-4, wherein the through hole (14) of the revolving valve (1) has a radial flow inlet (30) and an axial flow outlet (34).

6. The arrangement according to claim 5, wherein the radial flow inlet (30) is a hole in the form of a rectangular oblong slit (33), and the axial flow outlet (34) is a hole that has a much larger cross-sectional area than the area of the rectangular oblong slit (33).

7. The arrangement according to any of claims 2-6, further comprising a pressure sensor (9) and a speed-controlled electric motor (2), wherein the pressure sensor (9) is arranged to measure the air pressure in the rear end of the quarter wave resonance tube (8), and the speed-controlled electric motor (2) is arranged to drive the revolving valve (1) to be in phase with the low-frequency standing sound wave in the quarter wave resonance tube (8).

## Patentansprüche

1. Verfahren zum Einspeisen von Druckluftimpulsen in das hintere Ende eines Viertelwellenresonanzrohrs (8) zum Erzeugen einer stehenden Niederfrequenz-Schallwelle in dem Viertelwellenresonanzrohr (8), wobei das Verfahren das Erzeugen von Druckluftimpulsen durch Einspeisen von Druckluft durch mindestens ein Durchgangsloch (14, 14a) eines Drehventils (1) umfasst, das aus einem stationären äußeren Zylinder (13, 13a, 32) und einem inneren Drehzylinder (12, 12a, 31) besteht, wobei, wenn sich der innere Zylinder (12, 12a, 31) dreht, Druckluft während der Zeitintervalle der Oszillationszyklen der stehenden Niederfrequenz-Schallwelle durch das Durchgangsloch (14, 14a) strömt, wenn der Luftdruck in dem hinteren Ende des Viertelwellenresonanzrohrs (8) positiv ist, und während der Zeitintervalle der Oszillationszyklen der stehenden Niederfrequenz-Schallwelle daran gehindert wird, durch das Durchgangsloch (14, 14a) zu strömen, wenn der Luftdruck in dem hinteren Ende des Viertelwellenresonanzrohrs (8) negativ ist, wodurch die stehende Niederfrequenz-Schallwelle mit maximaler Eingangsleistung versorgt wird.

2. Anordnung, umfassend ein Viertelwellenresonanzrohr (8) und ein Drehventil (1), das aus einem stationären äußeren Zylinder (13, 13a, 32) und einem inneren Drehzylinder (12, 12a, 31) mit mindestens einem Durchgangsloch (14, 14a) zum Zuführen von Druckluftimpulsen zu dem hinteren Ende des Viertelwellenresonanzrohrs (8) zum Erzeugen einer stehenden Niederfrequenz-Schallwelle in dem Viertelwellenresonanzrohr (8) besteht, wobei das mindestens eine Durchgangsloch (14, 14a) derart angeordnet ist, dass, während sich der innere Zylinder (12, 12a, 31) dreht, Druckluft während der Zeitintervalle der Oszillationszyklen der stehenden Niederfrequenz-Schallwelle durch das Durchgangsloch (14, 14a) strömt, wenn der Luftdruck in dem hinteren Ende des Viertelwellenresonanzrohrs (8) positiv ist, und verhindert wird, dass er während der Zeitintervalle der Oszillationszyklen der stehenden Niederfrequenz-Schallwelle durch das Durchgangsloch (14, 14a) strömt, wenn der Luftdruck in dem hinteren Ende des Viertelwellenresonanzrohrs (8) negativ ist, wodurch die stehende Niederfrequenz-Schallwelle mit maximaler Eingangsleistung versorgt wird.

3. Anordnung nach Anspruch 2, wobei die Abmessungen des stationären äußeren Zylinders (13, 13a, 32), des inneren Drehzylinders (12, 12a, 31) bzw. des mindestens einen Troglochs (14, 14a) so ausgewählt sind, dass der Luftdurchlass durch das Durchgangsloch (14, 14a) für mindestens eine Hälfte der Zykluszeit des Drehventils (1) geschlossen ist.

4. Anordnung nach Anspruch 3, wobei die Abmessungen des stationären äußeren Zylinders (13a), des inneren Drehzylinders (12a) bzw. des mindestens einen Durchgangslochs (14a) so ausgewählt sind, dass der Luftdurchlass durch das Durchgangsloch (14a) für mindestens drei Viertel der Zykluszeit des Drehventils (1) geschlossen ist.

5. Anordnung nach einem der Ansprüche 2 bis 4, wobei das Durchgangsloch (14) des Drehventils (1) einen radialen Strömungseinlass (30) und einen axialen Strömungsauslass (34) aufweist.

6. Anordnung nach Anspruch 5, wobei der radiale Strömungseinlass (30) ein Loch in der Form eines rechteckigen länglichen Schlitzes (33) ist und der axiale Strömungsauslass (34) ein Loch ist, das eine viel größere Querschnittsfläche als die Fläche des rechteckigen länglichen Schlitzes (33) aufweist.

7. Anordnung nach einem der Ansprüche 2 bis 6, ferner umfassend einen Drucksensor (9) und einen geschwindigkeitsgesteuerten Elektromotor (2), wobei der Drucksensor (9) dazu angeordnet ist, den Luftdruck in dem hinteren Ende des Viertelwellenresonanzrohrs (8) zu messen, und der geschwindigkeitsgesteuerte Elektromotor (2) dazu ausgelegt ist, das Drehventil (1) anzutreiben, um in Phase mit der Niederfrequenz-Stufenschallwelle in dem Viertelwellenresonanzrohr (8) zu stehen.

## Revendications

1. Procédé pour l'alimentation en impulsions d'air sous pression de l'extrémité arrière d'un tube de résonance quart d'onde (8) pour la génération d'une onde sonore stationnaire basse fréquence dans ledit tube de résonance quart d'onde (8), le procédé comprenant la génération d'impulsions d'air sous pression par l'alimentation en air sous pression à travers au moins un trou traversant (14, 14a) d'une vanne tournante (1) constituée d'un cylindre externe stationnaire (13, 13a, 32) et d'un cylindre tournant interne (12, 12a, 31), dans lequel au fur et à mesure que le cylindre interne (12, 12a, 31) tourne, de l'air sous pression passe à travers ledit trou traversant (14, 14a) pendant les intervalles de temps des cycles d'oscillation de ladite onde sonore stationnaire basse fréquence lorsque la pression d'air dans ladite extrémité arrière du tube de résonance quart d'onde (8) est positive, et est bloqué pour ne pas passer à travers ledit trou traversant (14, 14a) pendant les intervalles de temps des cycles d'oscillation de ladite onde sonore stationnaire basse fréquence lorsque la pression d'air dans ladite extrémité arrière du tube de résonance quart d'onde (8) est négative, fournissant ainsi une puissance d'entrée maximale à ladite onde sonore stationnaire basse fréquence.

2. Agencement comprenant un tube de résonance quart d'onde (8) et une vanne tournante (1) constituée d'un cylindre externe stationnaire (13, 13a, 32) et d'un cylindre tournant interne (12, 12a, 31) avec au moins un trou traversant (14, 14a) pour la fourniture d'impulsions d'air sous pression à l'extrémité arrière du tube de résonance quart d'onde (8) pour la génération d'une onde sonore stationnaire basse fréquence dans le tube de résonance quart d'onde (8), dans lequel ledit au moins un trou traversant (14, 14a) est agencé de sorte qu'au fur et à mesure que le cylindre interne (12, 12a, 31) tourne, de l'air sous pression passe à travers ledit trou traversant (14, 14a) pendant les intervalles de temps des cycles d'oscillation de l'onde sonore stationnaire basse fréquence lorsque la pression d'air dans l'extrémité arrière du tube de résonance quart d'onde (8) est positive, et est bloqué pour ne pas passer à travers ledit trou traversant (14, 14a) pendant les intervalles de temps des cycles d'oscillation de ladite onde sonore stationnaire basse fréquence lorsque la pression d'air dans ladite extrémité arrière du tube de résonance quart d'onde (8) est négative, fournissant ainsi une puissance d'entrée maximale à ladite onde sonore stationnaire basse fréquence.

3. Agencement selon la revendication 2, dans lequel les dimensions du cylindre externe stationnaire (13, 13a, 32), du cylindre tournant interne (12, 12a, 31), et de l'au moins un trou traversant (14, 14a), respectivement, sont sélectionnées de telle sorte que le passage d'air à travers le trou traversant (14, 14a) est fermé pendant au moins la moitié du temps de cycle de la vanne tournante (1).

4. Agencement selon la revendication 3, dans lequel les dimensions du cylindre externe stationnaire (13a), du cylindre tournant interne (12a), et de l'au moins un trou traversant (14a), respectivement, sont sélectionnées de telle sorte que le passage d'air à travers le trou traversant (14a) est fermé pendant au moins trois quarts du temps de cycle de la vanne tournante (1).

5. Agencement selon l'une quelconque des revendications 2 à 4, dans lequel le trou traversant (14) de la vanne tournante (1) a une entrée d'écoulement radial (30) et une sortie d'écoulement axial (34).

6. Agencement selon la revendication 5, dans lequel l'entrée d'écoulement radial (30) est un trou sous la forme d'une fente oblongue rectangulaire (33), et la sortie d'écoulement axial (34) est un trou qui a une surface de section transversale beaucoup plus grande que la surface de la fente oblongue rectangulaire (33).

7. Agencement selon l'une quelconque des revendications 2 à 6, comprenant en outre un capteur de pression (9) et un moteur électrique commandé en vitesse (2), dans lequel le capteur de pression (9) est agencé pour la mesure de la pression d'air dans l'extrémité arrière du tube de résonance quart d'onde (8), et le moteur électrique commandé en vitesse (2) est agencé pour l'entraînement de la vanne tournante (1) pour qu'elle soit en phase avec l'onde sonore stationnaire basse fréquence dans le tube de résonance quart d'onde (8).
